# EUROPÄISCHE PATENTSCHRIFT

(11) **EP 3 388 861 B1**
(45) Veröffentlichungstag und Bekanntmachung des Hinweises auf die Patenterteilung: **29.09.2021**
(21) Anmeldenummer: 17166125.9
(22) Anmeldetag: 11.04.2017
(51) Int. Cl.: G01S 17/32, G01B 9/02

(54) **ABSOLUTE DISTANZMESSUNG AUF DYNAMISCHE ZIELE**
ABSOLUTE MEASUREMENT OF DISTANCE TO DYNAMIC TARGETS
MESURE DES DISTANCES ABSOLUES SUR DES CIBLES DYNAMIQUES

(43) Veröffentlichungstag der Anmeldung: 17.10.2018
(73) Patentinhaber: Leica Geosystems AG, 9435 Heerbrugg (CH)
(72) Erfinder: WILDI, Konrad, 5035 Unterentfelden (CH); LÜTHI, Thomas, 5000 Aarau (CH); MINDER, Hans-Ulrich, 4912 Aarwangen (CH)
(74) Vertreter: Kaminski Harmann

(56) Entgegenhaltungen:
- EP-A1- 2 653 884
- US-A1- 2014 376 001

## Beschreibung

Die Erfindung bezieht sich auf ein Messverfahren und einen Distanzmesser zur Bestimmung einer Absolutdistanz zu einem sich mit einer zum Distanzmesser radialen Bewegungsgeschwindigkeit bewegenden Ziel gemäss dem Oberbegriff der entsprechenden unabhängigen Patentansprüche.

Zur hochauflösenden Messung von Distanzen werden beispielsweise - heutzutage zunehmend standardisiert - Laser-Interferometer verwendet. Dabei läuft ein kollimierter Laserstrahl von einem Messgerät zu einem reflektierenden Ziel. Der gesendete Strahl wird dem vom Ziel reflektierten und im Messgerät empfangenen Strahl überlagert. Bei einer Änderung der Distanz wechselt entsprechend der Interferenz der beiden Strahlen die Intensität der überlagerten Strahlen. Basierend auf der Wellenlänge des Laserlichtes und einer Anzahl detektierten und mittels eines Zählers gezählten Intensitätsänderungen kann somit eine relative Distanzänderung zum Ziel bestimmt werden. Ausgehend von einem bekannten Referenzwert, also einer Absolutdistanz in einer Startposition, lässt sich somit auch eine Absolutdistanz von anderen Positionen ermitteln.

Ein solches Verfahren zur Bestimmung einer Relativdistanz bedingt allerdings, dass der Strahl zwischen Messgerät und Ziel nicht unterbrochen wird. Geschieht dies, so werden während dem Unterbruch keine Distanzänderungen mehr erfasst, und die Absolutdistanz zwischen Messgerät und Ziel ist nicht mehr bekannt und muss deshalb mit anderen Mitteln neu bestimmt respektive kalibriert werden.

Zur Messung von Absolutdistanzen sind verschiedene Verfahren bekannt, beispielsweise verschiedene Varianten basierend auf dem Prinzip der sogenannten Zahnradmethode nach Fizeau. Dabei wurde ursprünglich ein Lichtstrahl durch ein Zahnrad periodisch unterbrochen, dann zu einem Reflektor gesendet und schließlich am Zahnrad ein zweites Mal periodisch unterbrochen. Aus der Drehzahl des Zahnrades im Falle einer Auslöschung des zurückkehrenden Lichtstrahls lässt sich dessen Laufzeit durch Vergleich mit der Laufzeit eines Zahnradzahns bis zur nächsten Zahnlücke bestimmen.

Heutzutage wird anstelle des Zahnrades beispielsweise ein elektro-optischer Kristall als Modulator verwendet. Dabei wird der Messstrahl nicht mehr periodisch unterbrochen, sondern durch den Modulator moduliert. Bei der Modulation werden beispielsweise eine Polarisation und/oder die Intensität und/oder die Frequenz der Sendestrahlung moduliert, wobei basierend auf der Modulationsphase der zurückkommenden Sendestrahlung die Absolutdistanz zum Ziel abgeleitet werden kann.

Zum Beispiel wird ein Messsignal mittels Modulation/Demodulation von zumindest einem Teil der modulierten Sendestrahlung und einem Teil der vom Ziel zurückkommenden Sendestrahlung derart erfasst, so dass die Lichtintensität des Messsignalsals als Funktion des Reflektorabstandes und der Modulationsfrequenz periodisch ändert. Erhöht man beispielsweise die Modulationsfrequenz kontinuierlich über einen definierten Frequenzbereich, so bilden sich bei einer synchronen Aufzeichnung mit einem Intensitätsdetektor äquidistante Minima im Abstand der Wellenlängen der modulierten Frequenz. Die Entstehung der einzelnen Minima basiert dabei darauf, dass sich bei den einzelnen Minima in jedem Moment gerade eine ganze Anzahl von Modulations-Wellenlängen auf der doppelten Messdistanz zwischen Modulator und Ziel befinden. Die Messdistanz ist also im Wesentlichen dadurch gegeben, wie weit zwei Minima frequenzmässig voneinander entfernt liegen.

Befindet sich zum Beispiel ein Minimum bei einer ersten Frequenz, so ist in der doppelten Messdistanz eine ganze Anzahl Wellenlängen der ersten Frequenz enthalten. Wird nun die Modulationsfrequenz kontinuierlich erhöht, so ist beim nächsten benachbarten Minimum einer zweiten Frequenz in der doppelten Messdistanz genau eine Wellenlänge mehr der zweiten Frequenz enthalten. Da bei beiden Frequenzen dieselbe Distanz gemessen wird, kann nun also durch Ausmessung (frequenzmässiger Ort des Minimums) von mindestens zwei Minima die Absolutdistanz zum Ziel ermittelt werden.

Für die Erreichung hoher Messgenauigkeiten, beispielsweise Genauigkeiten von weniger als 100 µm, insbesondere weniger als 1 µm, wird die Ermittlung der einzelnen Minima durch atmosphärische Turbulenzen und Veränderungen des Brechungsindex in der Messstrecke erschwert. Die atmosphärischen Schwankungen können aber zum Beispiel durch Korrelation mit einem Referenzsignal kompensiert werden, beispielsweise unter Verwendung eines Wobbelgenerators für eine zusätzliche Frequenzmodulation (Wobble) der (Grund-)Modulationsfrequenz und eines Lockinverstärkers für die Detektion des modulierten Signals.

Messgeräte aus dem Stand der Technik verwenden dabei beispielsweise das Vorzeichen der Korrelation für die Bestimmung der Offsetrichtung zum Minimum, das heisst für die Bestimmung, ob sich eine aktuell eingestellte GrundModulationsfrequenz unterhalb oder oberhalb der Frequenz der Minimalstelle befindet. Tendenziell kann zwar über den Wert der Korrelation ferner auch eine vage frequenzmässige Entfernung (Offset) zur Minimalstelle vorausgesagt werden. Eine genaue Voraussage des Offsets zur Minimalstelle wird jedoch in der Praxis durch verschiedene Faktoren verunmöglicht, beispielsweise den verwendeten Reflektortyp, die Verschmutzung und Verkippung des Reflektors, die Anzielgenauigkeit, die Distanz zum Ziel, die Laserleistung, oder die Luftdämpfung.

Im statischen Fall, das heisst für ein Ziel mit fixem Abstand, kann die Minimalstelle beispielsweise mittels einer iterativen Annäherung - unter Zuhilfenahme der Offsetrichtung - bestimmt werden und es spielt meist keine Rolle, dass der Offset zur Minimalstelle nicht direkt aus der Korrelation hervorgeht. Die Distanzmessung dauert einfach etwas länger.

Typischerweise werden zur Signalverstärkung und/oder Elimination von Messrauschen mehrere Messwerte gefiltert, beispielsweise durch Integration oder Mittelwertbildung.

Im Gegensatz zur Messung von Relativdistanzen (beispielsweise mittels Interferometrie) benötigt eine Messung von Absolutdistanzen nach dem obigen Verfahren, bedingt durch das verwendete Messprinzip, beispielsweise abhängig von der Messdistanz (Signalstärke) und der Genauigkeit (atmosphärische Turbulenzen), eine bestimmte minimale Messdauer, während welcher sich die Distanz nicht ändern darf. Dies limitiert beispielsweise die Anwendung des Verfahrens für eine Vermessung und Verfolgung von dynamischen Zielen (Ziele mit einer bezüglich dem Messgerät radialen Bewegungsgeschwindigkeit). Oft werden deshalb in Distanzmessgeräten absolute Distanzmessmethoden, beispielsweise nach dem Fizeau-Prinzip, mit relativen Distanzmessmethoden kombiniert, da diese vergleichsweise hohe Messdynamiken aufweisen können, beispielsweise Methoden basierend auf relativen Interferometrie-Messungen oder basierend auf dem Pulslaufzeitverfahren.

Die EP 2 653 884 A1 beschreibt ein typisches Fizeau-Distanzmessverfahren. Signalverarbeitungsmethoden mittels Fouriertransformation sind - teilweise aus anderen Gebieten - bekannt, z.B. aus der US 2014/0376001 A1.

Es ist deshalb eine Aufgabe der Erfindung, ein verbessertes Distanzmessverfahren für die Bestimmung von Absolutdistanzwerten für bewegliche Ziele zur Verfügung zu stellen.

Eine spezielle Aufgabe der Erfindung liegt zudem darin, ein Distanzmessverfahren gemäss dem Fizeau-Prinzip mit hoher Messdynamik und hoher Distanzmessgenauigkeit zur Verfügung zu stellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein mit der Erfindung in Zusammenhang stehender Gegenstand betrifft ein Verfahren zur Bestimmung einer Distanz zu einem retro-reflektierenden Ziel, mit einem Erzeugen einer Sendestrahlung und einem Modulieren der Sendestrahlung. Für die Modulation wird dabei mittels Modulationsmitteln im optischen Strahlengang der Sendestrahlung eine Grundmodulation der Sendestrahlung mit einer Grundmodulationsfrequenz bereitgestellt, beispielsweise mittels eines Modulators basierend auf dem elektrooptischen Effekt zur Modulation der Polarisation der Sendestrahlung. Alternativ kann die Grundmodulation beispielsweise eine Modulation der Intensität und/oder der Frequenz der Sendestrahlung darstellen. Ferner wird mittels eines Wobbelgenerators ein Wobble der Grundmodulationsfrequenz bereitgestellt.

Insbesondere ist die Frequenz des Wobbles beispielsweise höher als die Frequenz der atmosphärischen Schwankungen des optischen Messweges zum Ziel, insbesondere höher als 1 kHz.

Die modulierte (und gewobbelte) Sendestrahlung wird zum Ziel ausgesendet, und es wird ein Messsignal erfasst, basierend auf einem Teil der vom Ziel zurückkommenden modulierten Sendestrahlung, nachfolgend Empfangsstrahlung genannt. Das Erfassen des Messsignals erfolgt dabei derart, dass dem Messsignal durch mindestens eine Referenzstelle, beispielsweise eine Minimalstelle, eines frequenzabhängigen Signalverlaufs des Messsignals eine Information bezüglich der Absolutdistanz zum Ziel anhaftet, basierend auf einer Modulationsphase der Empfangsstrahlung bezüglich einer eingestellten Grundmodulation.

Zum Beispiel heisst das, dass das Messsignal derart ausgesendet und derart erfasst wird, dass bei einer Variation der Grundmodulationsfrequenz über einen definierten Frequenzbereich mindestens eine Referenzstelle, typischerweise mindestens zwei Referenzstellen, entstehen würde, beispielsweise charakterisiert dadurch, dass sich bei der Referenzstelle in jedem Moment gerade eine ganze Anzahl von Modulations-Wellenlängen auf der doppelten Messdistanz zwischen Modulator und Ziel befinden.

Zum Beispiel wird der Wobble ferner derart bereitgestellt, dass der Wobble zumindest Abschnittsweise einen kontinuierlich steigenden oder kontinuierlich fallenden Frequenzverlauf repräsentiert, insbesondere wobei der Wobble bereitgestellt wird als ein Dreiecksignal, ein Sägezahnsignal, oder ein Sinussignal. Das erfasste Messsignal wird Fourier transformiert und die Bestimmung der Distanz erfolgt basierend auf dem Fourier transformierten Messsignal, wobei für eine eingestellte Grundmodulationsfrequenz die Ablage des Frequenzwerts der Grundmodulationsfrequenz zu einer Referenzstelle, insbesondere einer Minimalstelle, des Signalverlaufs des Messsignals abgeleitet wird, wobei die Ablage hier den Frequenzoffset und die Offsetrichtung zur Referenzstelle angibt.

Da beispielsweise die nähere Umgebung des Minimums als Parabel beschrieben werden kann, ermöglicht die Kombination des beschriebenen Wobbles - bereitgestellt als abschnittsweise kontinuierlich steigender oder kontinuierlich fallender Frequenzverlauf - und der Fourier-Transformation des Messsignals eine direkte Bestimmung der Ablage zur Referenzstelle, beispielsweise basierend auf einem einzelnen eingestellten Frequenzwert für die Grundmodulationsfrequenz. Die Bestimmung der Ablage zur Referenzstelle, z.B. einem Minimum ist unabhängig von der Parabelform und hängt nur von gegebenen berechenbaren Grössen ab.

Durch die direkte Bestimmung der Ablage eines eingestellten Frequenzwerts für die Grundmodulationsfrequenz zu einer Referenzstelle des Signalverlaufs des Messsignals wird eine hohe Messdynamik erzielt und somit eine rasche Bestimmung der absoluten Distanz auch auf bewegliche Ziele ermöglicht, beispielsweise Ziele mit einer zum Ursprung der Sendestrahlung radialen Bewegungsgeschwindigkeit bis zu plus/minus 6 m/sek.

Zum Beispiel wird der Wobble als ein periodisches Signal bereitgestellt, insbesondere wobei das Messsignal für die Bestimmung der Ablage derart abgetastet wird, dass die Abtastrate des Messsignals eine Zweierpotenz der Wobblefrequenz ist, wodurch beispielsweise für die Fourier Transformation des abgetasteten Messsignals kein Glättungsfenster notwendig ist.

Zum Beispiel wird die Ablage beispielsweise bestimmt basierend auf der Amplitude und dem Imaginärteil der ersten Harmonischen der Fourierzerlegung des Messsignals, der Amplitude der zweiten Harmonischen der Fourierzerlegung des Messsignals, und dem Hub des Wobbles.

Zum Beispiel kann die Ermittlung der Referenzstelle einen Sweep der Grundmodulationsfrequenz über einen definierten Frequenzbereich umfassen, insbesondere wobei der Frequenzbereich derart definiert wird, dass der Signalverlauf des Messsignals über den Frequenzbereich, basierend auf einem definierten Distanzmessbereich, für eine zu bestimmende Distanz innerhalb des Distanzmessbereichs mindestens zwei Referenzstellen umfasst.

Die Erfindung betrifft ein Verfahren zur Bestimmung einer Distanz zu einem retro-reflektierenden Ziel, mit einem Erzeugen einer Sendestrahlung und einem Modulieren der Sendestrahlung, wobei eine Grundmodulation der Sendestrahlung mit einer Grundmodulationsfrequenz bereitgestellt wird durch Modulationsmittel im optischen Strahlengang der Sendestrahlung. Das Verfahren umfasst dabei ein Aussenden der modulierten Sendestrahlung zum Ziel und ein Erfassen eines Messsignals basierend auf einem Teil der vom Ziel zurückkommenden modulierten Sendestrahlung, nachfolgend Empfangsstrahlung genannt, wobei das Erfassen des Messsignals derart erfolgt, dass dem Messsignal durch mindestens eine Referenzstelle eines frequenzabhängigen Signalverlaufs des Messsignals eine Information bezüglich der Absolutdistanz zum Ziel anhaftet, basierend auf einer Modulationsphase der Empfangsstrahlung bezüglich einer eingestellten Grundmodulation (ein eingestellter Frequenzwert für die Grundmodulationsfrequenz).

Gemäss der vorliegenden Erfindung wird die Distanz zum Ziel fortlaufend bestimmt, basierend auf einem Messvorgang mit definierten Schritten entsprechend der nachstehenden zeitlichen Reihenfolge: ein initiales Bestimmen einer initialen Distanz zum Ziel und ein fortlaufendes Bestimmen einer jeweils aktuellen Distanz zum Ziel basierend auf einer einstellbaren Grundmodulationsfrequenz.

Dabei basiert die initiale Distanzbestimmung auf einer Identifikation einer ersten und einer zweiten Referenzstelle des Signalverlaufs des Messsignals, basierend auf einem Sweep der Grundmodulationsfrequenz über einen definierten Frequenzbereich, einer Verfolgung der ersten und der zweiten Referenzstelle, und einem Ableiten der initialen Distanz basierend auf der identifizierten ersten und zweiten Referenzstelle.

Der Sweep kann beispielsweise derart erfolgen, dass die Frequenz der Grundmodulation kontinuierlich oder in definierten Frequenzschritten erhöht wird, wobei sich bei einer synchronen Aufzeichnung mit einem Intensitätsdetektor beispielsweise äquidistante Minima im Abstand der Wellenlängen der modulierten Frequenz bilden, basierend darauf, dass sich bei den einzelnen Minima in jedem Moment gerade eine ganze Anzahl von Modulations-Wellenlängen auf der doppelten Messdistanz zwischen Modulator und Ziel befinden.

Basierend auf der initialen Distanzbestimmung basiert das anschliessende fortlaufende Bestimmen einer jeweils aktuellen Distanz zum Ziel auf einer Verfolgung der ersten Referenzstelle, solange diese innerhalb eines innerhalb des definierten Frequenzbereichs definierten Toleranzbereichs liegt, und einer fortlaufenden Ableitung der Ablage des Frequenzwerts einer eingestellten Grundmodulationsfrequenz zur ersten Referenzstelle, wobei die fortlaufende Ableitung der Ablage auf einem mit einem Wobbelgenerator bereitgestellten Wobble der Grundmodulationsfrequenz basiert. Dabei wird der Wobble derart bereitgestellt, dass er zumindest Abschnittsweise einen kontinuierlich steigenden oder kontinuierlich fallenden Frequenzverlauf repräsentiert, insbesondere wobei der Wobble bereitgestellt wird als ein Dreiecksignal, ein Sägezahnsignal, oder ein Sinussignal. Das erfasste Messsignal wird Fourier transformiert und die Bestimmung der aktuellen Distanz erfolgt basierend auf dem Fourier transformierten Messsignal, so dass für eine eingestellte Grundmodulationsfrequenz die Ablage des Frequenzwerts der Grundmodulationsfrequenz zur ersten Referenzstelle des Signalverlaufs des Messsignals abgeleitet wird, nämlich der Frequenzoffset und die Offsetrichtung zur Referenzstelle.

Des Weiteren wird beispielsweise in einer Ausführungsform im Fall, wenn die erste Referenzstelle den Toleranzbereich verlässt, basierend auf der letzten Ermittlung der Ablage zur ersten Referenzstelle innerhalb des Toleranzbereichs eine weitere Referenzstelle innerhalb des Toleranzbereichs ausgewählt, und das fortlaufende Bestimmen der jeweils aktuellen Distanz zum Ziel wird fortgesetzt, basierend auf einer Verfolgung der weiteren Referenzstelle, solange diese innerhalb des Toleranzbereichs liegt und einer fortlaufenden Ableitung der Ablage des Frequenzwerts einer eingestellten Grundmodulationsfrequenz zur weiteren Referenzstelle.

Gemäss einer weiteren Ausführungsform wird die einstellbare Grundmodulationsfrequenz im Rahmen des Messvorgangs angepasst, basierend auf einzeln abgeleiteten Ablagen oder einer Serie von abgeleiteten Ablagen von Frequenzwerten von zuvor eingestellten Grundmodulationsfrequenzen zur ersten Referenzstelle und/oder einzeln abgeleiteten Ablagen oder einer Serie von abgeleiteten Ablagen von Frequenzwerten von zuvor eingestellten Grundmodulationsfrequenzen zur weiteren Referenzstelle.

Ein weiterer mit der Erfindung in Zusammenhang stehender Gegenstand betrifft einen Distanzmesser zur Bestimmung einer Distanz zu einem retro-reflektierenden Ziel, mit einer Strahlungsquelle zur Erzeugung einer Sendestrahlung, Modulationsmitteln im optischen Strahlengang der Sendestrahlung die konfiguriert sind zur Bereitstellung einer Grundmodulation der Sendestrahlung mit einer Grundmodulationsfrequenz, einem Wobbelgenerator der konfiguriert ist zur Bereitstellung eines Wobble der Grundmodulationsfrequenz, einem Sendepfad zum Aussenden eines Teils der modulierten Sendestrahlung zum Ziel, einem Empfangspfad mit einem Empfänger der konfiguriert ist zum Erfassen eines Messsignals basierend auf einem Teil der vom Ziel zurückkommenden modulierten Sendestrahlung, nachfolgend Empfangsstrahlung genannt, und einer Recheneinheit die konfiguriert ist zur Bestimmung der Distanz als Absolutdistanz. Die Modulation kann dabei derart erfolgen, dass eine Polarisation, die Intensität, und/oder die Frequenz der Sendestrahlung moduliert wird. Ferner ist der Distanzmesser derart konfiguriert, dass das Aussenden des Teils der modulierten Sendestrahlung und das Erfassen des Messsignals derart erfolgt, dass dem Messsignal durch mindestens eine Referenzstelle eines frequenzabhängigen Signalverlaufs des Messsignals eine Information bezüglich der Absolutdistanz zum Ziel anhaftet, basierend auf einer Modulationsphase der Empfangsstrahlung bezüglich einer eingestellten Grundmodulation.

Insbesondere wird der Wobble durch den Wobblegenerator beispielsweise mit einer Frequenz höher als die Frequenz der atmosphärischen Schwankungen des optischen Messweges zum Ziel bereitgestellt, insbesondere höher als 1 kHz.

Zum Beispiel ist der Wobblegenerator konfiguriert zur Bereitstellung des Wobble als ein Wobble mit einem zumindest Abschnittsweise kontinuierlich steigenden oder kontinuierlich fallenden Frequenzverlauf, insbesondere zur Bereitstellung des Wobble als ein Dreiecksignal, ein Sägezahnsignal, oder ein Sinussignal, und die Recheneinheit ist konfiguriert, um das erfasste Messsignal mittels Fourier Transformation zu transformieren, und die Bestimmung der Distanz basierend auf dem Fourier transformierten Messsignal durchzuführen. Dabei leitet die Recheneinheit zur Bestimmung der Distanz für eine eingestellte Grundmodulationsfrequenz die Ablage des Frequenzwerts der Grundmodulationsfrequenz zu einer Referenzstelle, insbesondere einer Minimalstelle, des Signalverlaufs des Messsignals ab, nämlich den Frequenzoffset und die Offsetrichtung zur Referenzstelle.

Zum Beispiel ist der Wobblegenerator konfiguriert, um den Wobble als ein periodisches Signal bereitzustellen, beispielsweise als ein zeitdiskret generiertes Signal, insbesondere mit einer als Zweierpotenz gegebenen Anzahl Werten pro Periode, insbesondere wobei die Recheneinheit derart konfiguriert ist, dass das Messsignal für die Bestimmung der Ablage derart abgetastet wird, dass die Abtastrate Messsignals eine Zweierpotenz der Wobblefrequenz ist, z.B. das 32-fache der Wobblefrequenz.

Zum Beispiel ist die Recheneinheit derart konfiguriert, dass die Ablage bestimmt wird basierend auf der Amplitude und dem Imaginärteil der ersten Harmonischen der Fourierzerlegung des Messsignals, der Amplitude der zweiten Harmonischen der Fourierzerlegung des Messsignals, und dem Hub des Wobbles.

Der Distanzmesser kann ferner konfiguriert sein, um die Ermittlung der Referenzstelle mittels eines Sweep der Grundmodulationsfrequenz über einen definierten Frequenzbereich durchzuführen, insbesondere wobei der Frequenzbereich derart definiert ist, dass der Signalverlauf des Messsignals über den Frequenzbereich, basierend auf einem definierten Distanzmessbereich, für eine zu bestimmende Distanz innerhalb des Distanzmessbereichs mindestens zwei Referenzstellen umfasst.

Die Erfindung betrifft ferner einen Distanzmesser zur Bestimmung einer Distanz zu einem retro-reflektierenden Ziel, mit einer Strahlungsquelle zur Erzeugung einer Sendestrahlung, Modulationsmitteln im optischen Strahlengang der Sendestrahlung die konfiguriert sind zur Bereitstellung einer Grundmodulation der Sendestrahlung mit einer Grundmodulationsfrequenz, einem Sendepfad zum Aussenden eines Teils der modulierten Sendestrahlung zum Ziel, einem Empfangspfad mit einem Empfänger der konfiguriert ist zum Erfassen eines Messsignals basierend auf einem Teil der vom Ziel zurückkommenden modulierten Sendestrahlung, nachfolgend Empfangsstrahlung genannt, und einer Recheneinheit die konfiguriert ist zur Bestimmung der Distanz als Absolutdistanz. Dabei ist der Distanzmesser derart konfiguriert, dass das Aussenden des Teils der modulierten Sendestrahlung und das Erfassen des Messsignals derart erfolgt, dass dem Messsignal durch mindestens eine Referenzstelle eines frequenzabhängigen Signalverlaufs des Messsignals eine Information bezüglich der Absolutdistanz zum Ziel anhaftet, basierend auf einer Modulationsphase der Empfangsstrahlung bezüglich einer eingestellten Grundmodulation.

Gemäss der vorliegenden Erfindung ist die Recheneinheit konfiguriert zur Durchführung eines voll automatisierten vorprogrammierten Messvorgangs für ein fortlaufendes Erfassen des Messsignals und ein fortlaufendes Bestimmen der Distanz zum Ziel (8), wobei der Messvorgang definierte Schritte entsprechend der nachstehenden zeitlichen Reihenfolge umfasst: ein initiales Bestimmen einer initialen Distanz zum Ziel und ein fortlaufendes Bestimmen einer jeweils aktuellen Distanz zum Ziel basierend auf einer einstellbaren Grundmodulationsfrequenz.

Dabei basiert das Bestimmen der initialen Distanz zum Ziel auf einer Identifikation einer ersten und einer zweiten Referenzstelle des Signalverlaufs des Messsignals, basierend auf einem Sweep der Grundmodulationsfrequenz über einen definierten Frequenzbereich, einer Verfolgung der ersten und der zweiten Referenzstelle, und einem Ableiten der initialen Distanz basierend auf der identifizierten ersten und zweiten Referenzstelle.

Anschliessend basiert das fortlaufende Bestimmen einer jeweils aktuellen Distanz zum Ziel auf einer einstellbaren Grundmodulationsfrequenz und einer Verfolgung der ersten Referenzstelle, solange diese innerhalb eines innerhalb des definierten Frequenzbereichs definierten Toleranzbereichs liegt, und einer fortlaufenden Ableitung der Ablage des Frequenzwerts einer eingestellten Grundmodulationsfrequenz zur ersten Referenzstelle. Dabei basiert die fortlaufende Ableitung der Ablage auf einem mit einem Wobbelgenerator bereitgestellten Wobble der Grundmodulationsfrequenz, wobei der Wobblegenerator konfiguriert ist zur Bereitstellung des Wobble als ein Wobble mit einem zumindest abschnittsweise kontinuierlich steigenden oder kontinuierlich fallenden Frequenzverlauf, insbesondere zur Bereitstellung des Wobble als ein Dreiecksignal, ein Sägezahnsignal, oder ein Sinussignal. Ferner ist die Recheneinheit konfiguriert, um das erfasste Messsignal mittels Fourier Transformation zu transformieren und um die Bestimmung der Distanz basierend auf dem Fourier transformierten Messsignal durchzuführen, wobei die Recheneinheit zur Bestimmung der Distanz für eine eingestellte Grundmodulationsfrequenz die Ablage des Frequenzwerts der Grundmodulationsfrequenz zu einer Referenzstelle, insbesondere einer Minimalstelle, des Signalverlaufs des Messsignals ableitet, nämlich den Frequenzoffset und die Offsetrichtung zur Referenzstelle.

In einer Ausführungsform ist der Distanzmesser derart konfiguriert, dass der Messvorgang einen weiteren Schritt umfasst, so dass im Fall, wenn die erste Referenzstelle den Toleranzbereich verlässt, basierend auf der letzten Ermittlung der Ablage zur ersten Referenzstelle innerhalb des Toleranzbereichs eine weitere Referenzstelle innerhalb des Toleranzbereichs ausgewählt wird, und das fortlaufende Bestimmen der jeweils aktuellen Distanz zum Ziel fortgesetzt wird, basierend auf einer Verfolgung der weiteren Referenzstelle, solange diese innerhalb des Toleranzbereichs liegt und einer fortlaufenden Ableitung der Ablage des Frequenzwerts einer eingestellten Grundmodulationsfrequenz zur weiteren Referenzstelle.

Gemäss einer weiteren Ausführungsform wird die einstellbare Grundmodulationsfrequenz im Rahmen des Messvorgangs zudem angepasst, basierend auf einzeln abgeleiteten Ablagen oder einer Serie von abgeleiteten Ablagen von Frequenzwerten von zuvor eingestellten Grundmodulationsfrequenzen zur ersten Referenzstelle und/oder einzeln abgeleiteten Ablagen oder einer Serie von abgeleiteten Ablagen von Frequenzwerten von zuvor eingestellten Grundmodulationsfrequenzen zur weiteren Referenzstelle.

Das erfindungsgemässe Distanzmessverfahren und der erfindungsgemässe Distanzmesser werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: eine schematische Darstellung eines Absolutdistanzmessers gemäss dem Fizeau-Prinzip basierend auf einer Modulation der Polarisation der Sendestrahlung;
- Fig. 2:: Signalverlauf eines Messsignals einer Distanzmessung nach dem Fizeau-Prinzip;
- Fig. 3:: iterative Bestimmung einer Minimalstelle des Messsignals nach dem Stand der Technik;
- Fig. 4:: erfindungsgemässe Ermittlung der Minimalstelle, basierend auf einem Wobble und einer Fourier Transformation des detektierten Messsignals.

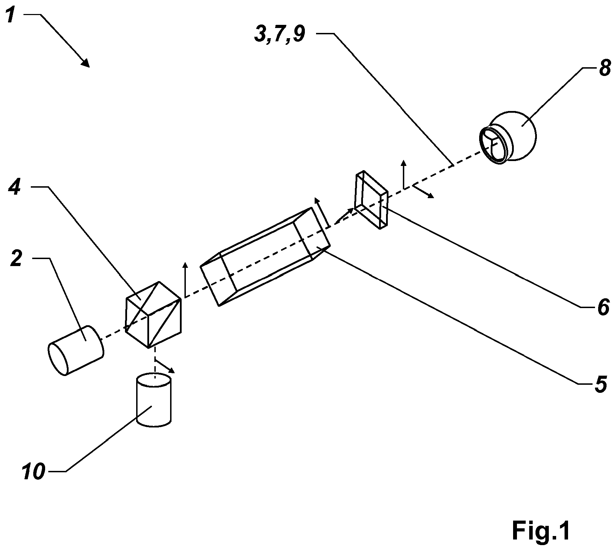

**Figur 1** zeigt eine Struktur eines Fizeau-Distanzmessers 1, hier basierend auf einer Modulation der Polarisation der Sendestrahlung. Im Stand der Technik sind jedoch weitere Ausführungsformen, beispielsweise basierend auf einer Modulation der Intensität und/oder der Frequenz der Sendestrahlung hinlänglich bekannt, wobei bei allen Ausführungsformen basierend auf der Modulationsphase der zurückkommenden Sendestrahlung die Absolutdistanz zum Ziel abgeleitet werden kann.

Im gezeigten Beispiel weist der Fizeau-Distanzmesser 1 eine Strahlungsquelle 2 zur Erzeugung eines Messstrahls 3 auf, welcher über einen polarisierenden Strahlteiler 4, einen Modulator 5, einen Retarder oder eine Retarderplatte 6, hier beispielsweise eine lambda/4-Platte, als Sendestrahl 7 zu einem retro-reflektierenden Ziel 8 ausgesendet wird. Die Distanz zum Ziel kann beispielsweise unter einem Meter bis mehrere hundert Meter, ggf. auch einige Kilometer betragen. Als Modulator 5 kann beispielsweise ein elektrooptischer Modulator, z.B. basierend auf einer Pockels-Zelle oder einem FLC (Ferro-electric Liquid Crystal), ein akustooptischer Modulator, oder beispielsweise auch ein Modulator basierend auf einer integrierten Optik, beispielsweise basierend auf einer Mach-Zehnder Anordnung, verwendet werden.

Zumindest ein Teil der Sendestrahlung 7 wird vom Ziel 8 als Empfangsstrahlung 9 zurückgeworfen, wobei mittels eines Detektors 10 ein Messsignal als Funktion der Modulationsfrequenz des Modulators 5 erfasst wird.

Im gezeigten Beispiel wird die Empfangsstrahlung 9 wiederum durch die Retarderplatte 6, den Modulator 5 und den polarisierenden Strahlteiler 4 auf einen Detektor 10 geführt. Der Modulator 5 moduliert hier also die Polarisation des ausgehenden wie auch des zurückkehrenden Messlichtes. Dazu weist er beispielsweise eine Einrichtung zur Ansteuerung des Modulators 5 mit einer hochfrequenten Modulationsfrequenz auf. Die Retarderplatte 6, hier eine lambda/4-Platte, erzeugt somit aus linear polarisiertem Licht zirkulär polarisiertes Licht, und nach zweimaligem Durchgang wieder linear polarisiertes Licht, aber mit um 90° gedrehter Polarisationsrichtung, beispielsweise im Falle eines Modulationskristalles mit vertauschten Achsen der Modulation im Modulationskristall.

Der Detektor 10 misst die Intensität des zurückkehrenden Lichtes. Eine Auswerteeinheit (nicht gezeigt) verarbeitet ein Ausgangssignal dieses Detektors 10, steuert die Modulationsfrequenz des Modulators 5, beispielsweise zur iterativen Bestimmung eines Minimums des Detektorsignals, und führt die Distanzbestimmung nach dem Fizeau-Verfahren durch. Weitere allgemein bekannte Elemente eines solchen Distanzmessers wie Strahlformungsoptik, Filter, Polarisatoren, Spiegel etc. können vorliegen, sind aber der Übersichtlichkeit wegen nicht eingezeichnet.

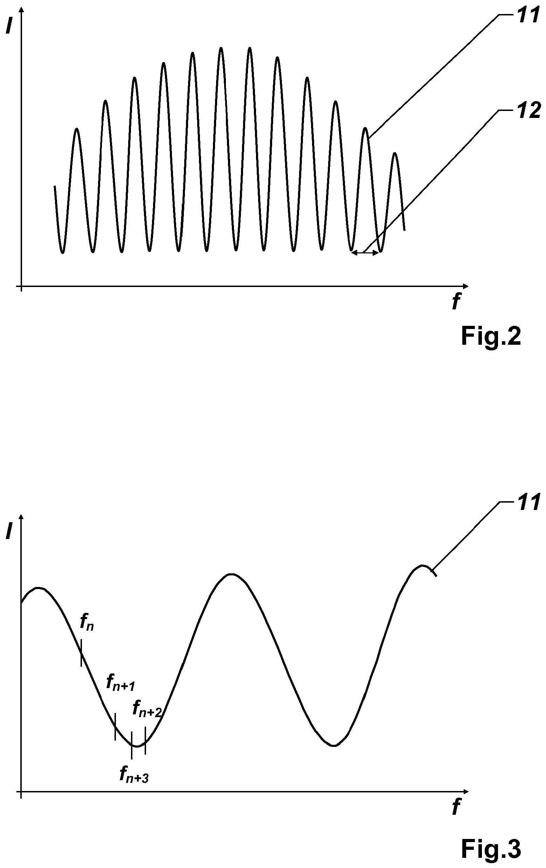

**Figur 2** zeigt einen Signalverlauf 11 eines Messsignals einer Distanzmessung nach dem Fizeau-Prinzip als Funktion der Modulationsfrequenz des Modulators 5 (siehe Fig. 1), beispielsweise basierend auf einem Distanzmesser 1 gemäss Fig. 1.

Unabhängig von der Art der Modulation (Polarisation, Intensität, Phase), weist der Signalverlauf 11 eines Messsignals eines Fizeau-Distanzmessers die allgemeine Eigenschaft auf, dass die Intensität I des Messsignals als Funktion des Reflektorabstandes und der Modulationsfrequenz f periodisch ändert. Erhöht man beispielsweise die Modulationsfrequenz f kontinuierlich über einen definierten Frequenzbereich, so bilden sich bei einer synchronen Aufzeichnung mit einem Fotodetektor äquidistante Minima im Abstand 12 der Wellenlängen der modulierten Frequenz.

Befindet sich zum Beispiel ein Minimum bei einer ersten Frequenz, so ist in der doppelten Messdistanz eine ganze Anzahl Wellenlängen der ersten Frequenz enthalten, wobei nun also bei konstant gehaltener Distanz zum Ziel 8 durch Ausmessung (frequenzmässiger Ort des Minimums) von mindestens zwei Minima die Absolutdistanz zum Ziel 8 ermittelt werden kann.

Für eine genaue Bestimmung der Minima wird auf die Modulationsfrequenz f typischerweise ein Wobble aufgebracht, beispielsweise eine sinusförmige Frequenzmodulation. Damit kann dann beispielsweise aus dem erfassten Messsignal die erste Ableitung gebildet werden, wobei an der Minimalstelle des Signalverlaufs 11 ohne Wobble ein Nulldurchgang des Messsignals (mit Wobble) stattfindet. Ein solcher Nulldurchgang ist oft einfacher als ein Minimum zu detektieren.

Messgeräte aus dem Stand der Technik verwenden dabei beispielsweise das Vorzeichen der Korrelation vom erfassten Messsignal mit dem Wobblesignal für die Bestimmung der Offsetrichtung zum Minimum. Tendenziell kann zwar über den Wert der Korrelation ferner auch eine vage frequenzmässige Entfernung (Offset) zur Minimalstelle vorausgesagt werden. Eine genaue Voraussage des Offsets zur Minimalstelle wird jedoch in der Praxis durch verschiedene Faktoren verunmöglicht, beispielsweise den verwendeten Reflektortyp, die Verschmutzung und Verkippung des Reflektors, die Anzielgenauigkeit, die Distanz zum Ziel, die Laserleistung, oder die Luftdämpfung.

Die Minimalstellen des Signalverlaufs 11 des Messsignals werden deshalb im Stand der Technik typischerweise iterativ durch Variation der (Grund-)Modulationsfrequenz des Modulators 5 bestimmt. Dabei wird beispielsweise bei jedem Schritt eine angepasste Frequenzschrittweite verwendet, die möglichst rasch nahe an den gesuchten Nulldurchgang führt. Dies ergibt eine zeitliche Abtastfolge von Modulationsfrequenzen fₙ, fₙ₊₁, fₙ₊₂,..., die zur Nulldurchgangsfrequenz respektive Minimumsfrequenz führt.

Da diese iterative Annäherung eine gewisse Zeit erfordert, typischerweise werden zur Signalverstärkung und/oder Elimination von Messrauschen mehrere Messwerte gefiltert, beispielsweise durch Integration oder Mittelwertbildung darf sich gemäss dem Stand der Technik die Distanz während dieser Zeit nicht ändern, da die Iteration der Distanzänderung in der Regel nicht schnell genug folgen könnte.

Dies limitiert beispielsweise die Anwendung des Verfahrens für eine Vermessung und Verfolgung von dynamischen Zielen (Ziele mit einer bezüglich dem Messgerät radialen Bewegungsgeschwindigkeit).

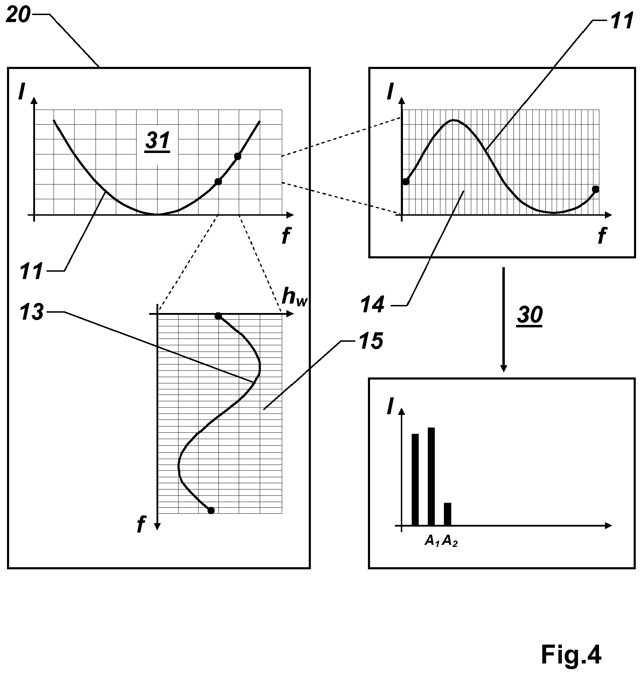

**Figur 4** zeigt eine erfindungsgemässe Ermittlung einer Referenzstelle des Signalverlaufs 11 (siehe Fig. 3) des Messsignals, hier wiederum eine Minimalstelle, mittels einer Modulation 20 der Sendestrahlung basierend auf einer Grundmodulation der Sendestrahlung, erzeugt durch Modulationsmittel im optischen Strahlengang der Sendestrahlung 7 (Fig. 1), und einem Wobble 13, erzeugt durch einen Wobbelgenerator. Erfindungsgemäss erfolgt die Ermittlung der Referenzstelle des Signalverlaufs 11 basierend auf dem Signalverlauf des erfassten (gewobbelten) Messignals, sowie dessen Fourier Transformation 30.

Das Wobblesignal 13 wird dabei derart bereitgestellt, dass der Wobble 13 zumindest Abschnittsweise einen kontinuierlich steigenden oder kontinuierlich fallenden Frequenzverlauf repräsentiert, insbesondere wobei der Wobble 13 bereitgestellt wird als ein Dreiecksignal, ein Sägezahnsignal, oder ein Sinussignal.

Insbesondere ist die Frequenz des Wobbles 13 beispielsweise derart eingestellt, dass diese höher ist, als die Frequenz der atmosphärischen Schwankungen des optischen Messweges zum Ziel, insbesondere höher als 1 kHz, wobei der Hub h_{w} des Wobbles typischerweise viel kleiner ist als der Frequenzabstand zwischen zwei benachbarten Referenzstellen des Signalverlaufs 11 des Messsignals.

Erfindungsgemäss wird das erfasste (gewobbelte) Messsignal Fourier transformiert 30, wobei die Bestimmung der Distanz, beispielsweise mittels Bestimmung der Ablage des Frequenzwerts einer eingestellten Grundmodulationsfrequenz zu einer Referenzstelle, basierend auf dem Fourier transformierten Messsignal 30 erfolgt.

Im gezeigten Beispiel ist das Wobblesignal 13 ein Sinussignal, wobei die Minimumsumgebung 31 des Signalverlaufs 11 beispielsweise näherungsweise als Parabel beschrieben werden kann. Es sind auch andere Kombinationen von Minimumnachbildungen und Wobblesignalen möglich, beispielsweise ein als (1-cos(x)) ausgebildetes Minimum oder ein Wobblesignal basierend auf einem Dreieck- oder Sägezahnsignal, aber ein Parabelmodell für das Minimum und der Sinus als Wobblequelle führen zur einfachsten mathematischen Beschreibung.

Da die nähere Umgebung des Minimums als Parabel beschrieben werden kann, ergeben sich bei der Fourier-Transformation 30 des Messsignals, basierend auf der modulierten und mittels eines Sinus gewobbelten Sendestrahlung, die Eigenschaften, dass basierend auf einer eingestellten Grundmodulationsfrequenz der Modulationsmittel die Bestimmung der Ablage des Frequenzwerts der Grundmodulationsfrequenz zum Minimum unabhängig ist von der Parabelform und nur von gegebenen berechenbaren Grössen abhängt. Die Form der Parabel ist also belanglos und die Bestimmung der Ablage ist unabhängig von der zurückkommenden Strahlungsintensität, d.h. unabhängig vom verwendetem Reflektortyp, einer Reflektorverkippung, einer Reflektorverschiebung, oder einer Reflektorverschmutzung.

Im beschriebenen Beispiel, kann die Ablage, das heisst der Offsetbetrag und die Offsetrichtung, beispielsweise direkt bestimmt werden über den Hub H des Wobbelsignals, sowie über die erste Harmonische A₁ und die zweite Harmonische A₂ der Fourierzerlegung 30 des Messsignals. Der Offsetbetrag D kann beispielsweise bestimmt werden durch die Formel D = A₁/A₂·H·K, wobei K ein Kalibrationsparameter ist, wobei die Offsetrichtung beispielsweise über den Imaginärteil der ersten Harmonischen A₁ abgeleitet werden kann.

Für die exemplarische Ausführung ist es zudem beispielsweise von Vorteil, wenn der Signalverlauf des Messsignals 11 mit einer Abtastrate 14 abgetastet wird, welche eine Zweierpotenz der Wobblefrequenz ist, wobei in der Figur der Wobble beispielsweise als ein zeitdiskretes Signal bereitgestellt wird und die Taktrate des Wobbles 15 gerade gleich dem Sampling 14 des Messsignals 11 ist.

Durch die erfindungsgemässe direkte Bestimmung der Ablage des Frequenzwerts einer eingestellten Grundmodulationsfrequenz zu einer Referenzstelle des Signalverlaufs 11 des Messsignals, insbesondere eine Minimalstelle, wird eine hohe Messdynamik erzielt und somit eine rasche Bestimmung der absoluten Distanz auch auf bewegliche Ziele ermöglicht, im Speziellen Ziele mit einer zum Ursprung der Sendestrahlung radialen Bewegungsgeschwindigkeit bis zu plus/minus 6 m/sek.

Eine initiale absolute Distanzbestimmung gemäss dem Fizeau-Verfahren basiert beispielsweise auf einer Identifikation und insbesondere für bewegliche Ziele einer Verfolgung von mindestens einer ersten und einer zweiten Referenzstelle, z.B. zwei benachbarte Minima, des Signalverlaufs des Messsignals. Die Identifizierung der Referenzstellen kann beispielsweise mit einem Frequenzsweep der Modulationsmittel über einen definierten Frequenzbereich erfolgen und/oder mittels definierter Anpassung einer Abfolge von Frequenzschritten.

Für eine fortlaufende Bestimmung der Distanz zu einem initial erfassten Ziel reicht es aber durch die erfindungsgemässe direkte Bestimmung der Ablage des Frequenzwerts einer eingestellten Grundmodulationsfrequenz zu einer Referenzstelle aus, basierend auf den äquidistanten Abständen 12 (Fig. 2) der Minima des Signalverlaufs 11, wenn mindestens eine Referenzstelle verfolgt und für die Ableitung der Distanz verwendet wird.

Beispielsweise kann im Fall, wenn eine aktuell für die Distanzableitung verwendete erste Referenzstelle den für die fortlaufende Distanzmessung gewählten Frequenzerfassungsbereich verlässt eine neue geeignete Referenzstelle für die weitere Distanzableitung ausgewählt werden.

Weiter kann auch die eingestellte Grundmodulationsfrequenz im Rahmen des Messvorgangs angepasst werden, beispielsweise basierend auf einzeln abgeleiteten Ablagen oder einer Serie von abgeleiteten Ablagen von Frequenzwerten von zuvor eingestellten Grundmodulationsfrequenzen zu einer Referenzstelle.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Verfahren zur Bestimmung einer Distanz zu einem retro-reflektierenden Ziel (8), mit
• einem Erzeugen einer Sendestrahlung (7),
• einem Modulieren (20) der Sendestrahlung (7), wobei eine Grundmodulation der Sendestrahlung mit einer Grundmodulationsfrequenz bereitgestellt wird durch Modulationsmittel (5) im optischen Strahlengang der Sendestrahlung (7),
• einem Aussenden der modulierten Sendestrahlung zum Ziel (8), und
• einem Erfassen eines Messsignals basierend auf einem Teil der vom Ziel zurückkommenden modulierten Sendestrahlung, nachfolgend Empfangsstrahlung (9) genannt, und
wobei das Erfassen des Messsignals derart erfolgt, dass dem Messsignal durch mindestens eine Referenzstelle eines frequenzabhängigen Signalverlaufs (11) des Messsignals eine Information bezüglich der Absolutdistanz zum Ziel (8) anhaftet, basierend auf einer Modulationsphase der Empfangsstrahlung (9) bezüglich einer eingestellten Grundmodulation,
**dadurch gekennzeichnet, dass**
die Distanz zum Ziel (8) fortlaufend bestimmt wird, basierend auf einem Messvorgang mit definierten Schritten entsprechend der nachstehenden zeitlichen Reihenfolge:
• initiales Bestimmen einer initialen Distanz zum Ziel (8) basierend auf
∘ einer Identifikation einer ersten und einer zweiten Referenzstelle des Signalverlaufs (11) des Messsignals, basierend auf einem Sweep der Grundmodulationsfrequenz über einen definierten Frequenzbereich und/oder mittels definierter Anpassung einer Abfolge von Frequenzschritten der Grundmodulationsfrequenz,
∘ einer Verfolgung der ersten und der zweiten Referenzstelle, und
∘ einem Ableiten (12) der initialen Distanz basierend auf der identifizierten ersten und zweiten Referenzstelle,
• fortlaufendes Bestimmen einer jeweils aktuellen Distanz zum Ziel basierend auf einer einstellbaren Grundmodulationsfrequenz, basierend auf
∘ einer Verfolgung der ersten Referenzstelle, solange diese innerhalb eines innerhalb des definierten Frequenzbereichs definierten Toleranzbereichs liegt, und
∘ einer fortlaufenden Ableitung der Ablage des Frequenzwerts einer eingestellten Grundmodulationsfrequenz zur ersten Referenzstelle,
wobei die fortlaufende Ableitung der Ablage auf einem mit einem Wobbelgenerator bereitgestellten Wobble (13) der Grundmodulationsfrequenz basiert, wobei
• der Wobble (13) zumindest abschnittsweise einen kontinuierlich steigenden oder kontinuierlich fallenden Frequenzverlauf repräsentiert, insbesondere wobei der Wobble (13) bereitgestellt wird als ein Dreiecksignal, ein Sägezahnsignal, oder ein Sinussignal,
• das erfasste Messsignal Fourier transformiert (30) wird, und
• die Bestimmung der aktuellen Distanz basierend auf dem Fourier transformierten Messsignal (30) erfolgt, dass für eine eingestellte Grundmodulationsfrequenz die Ablage des Frequenzwerts der Grundmodulationsfrequenz zur ersten Referenzstelle des Signalverlaufs (11) des Messsignals abgeleitet wird, nämlich der Frequenzoffset und die Offsetrichtung zur Referenzstelle.

2. Verfahren nach Anspruch 1,
**dadurch gekennzeichnet, dass**
im Fall, wenn die erste Referenzstelle den Toleranzbereich verlässt, basierend auf der letzten Ermittlung der Ablage zur ersten Referenzstelle innerhalb des Toleranzbereichs eine weitere Referenzstelle innerhalb des Toleranzbereichs ausgewählt wird, und das fortlaufende Bestimmen der jeweils aktuellen Distanz zum Ziel fortgesetzt wird, basierend auf
• einer Verfolgung der weiteren Referenzstelle, solange diese innerhalb des Toleranzbereichs liegt und
• einer fortlaufenden Ableitung der Ablage des Frequenzwerts einer eingestellten Grundmodulationsfrequenz zur weiteren Referenzstelle.

3. Verfahren nach Anspruch 1 oder 2,
**dadurch gekennzeichnet, dass**
die einstellbare Grundmodulationsfrequenz im Rahmen des Messvorgangs angepasst wird, basierend auf
• einzeln abgeleiteten Ablagen oder einer Serie von abgeleiteten Ablagen von Frequenzwerten von zuvor eingestellten Grundmodulationsfrequenzen zur ersten Referenzstelle und/oder
• einzeln abgeleiteten Ablagen oder einer Serie von abgeleiteten Ablagen von Frequenzwerten von zuvor eingestellten Grundmodulationsfrequenzen zur weiteren Referenzstelle.

4. Distanzmesser (1) zur Bestimmung einer Distanz zu einem retro-reflektierenden Ziel (8), mit
• einer Strahlungsquelle (2) zur Erzeugung einer Sendestrahlung (7),
• Modulationsmitteln (5) im optischen Strahlengang der Sendestrahlung (7) die konfiguriert sind zur Bereitstellung einer Grundmodulation der Sendestrahlung mit einer Grundmodulationsfrequenz,
• einem Sendepfad zum Aussenden eines Teils der modulierten Sendestrahlung zum Ziel (8),
• einem Empfangspfad mit einem Empfänger (10) der konfiguriert ist zum Erfassen eines Messsignals basierend auf einem Teil der vom Ziel zurückkommenden modulierten Sendestrahlung, nachfolgend Empfangsstrahlung (9) genannt, und
• einer Recheneinheit die konfiguriert ist zur Bestimmung der Distanz als Absolutdistanz,
wobei der Distanzmesser derart konfiguriert ist, dass das Aussenden des Teils der modulierten Sendestrahlung und das Erfassen des Messsignals derart erfolgt, dass dem Messsignal durch mindestens eine Referenzstelle eines frequenzabhängigen Signalverlaufs (11) des Messsignals eine Information bezüglich der Absolutdistanz zum Ziel (8) anhaftet, basierend auf einer Modulationsphase der Empfangsstrahlung (9) bezüglich einer eingestellten Grundmodulation,
**dadurch gekennzeichnet, dass**
die Recheneinheit konfiguriert ist zur Durchführung eines voll automatisierten vorprogrammierten Messvorgangs für ein fortlaufendes Erfassen des Messsignals und ein fortlaufendes Bestimmen der Distanz zum Ziel (8), wobei der Messvorgang definierte Schritte entsprechend der nachstehenden zeitlichen Reihenfolge umfasst:
• initiales Bestimmen einer initialen Distanz zum Ziel (8) basierend auf
∘ einer Identifikation einer ersten und einer zweiten Referenzstelle des Signalverlaufs (11) des Messsignals, basierend auf einem Sweep der Grundmodulationsfrequenz über einen definierten Frequenzbereich und/oder mittels definierter Anpassung einer Abfolge von Frequenzschritten der Grundmodulationsfrequenz,
∘ einer Verfolgung der ersten und der zweiten Referenzstelle, und
∘ einem Ableiten (12) der initialen Distanz basierend auf der identifizierten ersten und zweiten Referenzstelle,
• fortlaufendes Bestimmen einer jeweils aktuellen Distanz zum Ziel basierend auf einer einstellbaren Grundmodulationsfrequenz, basierend auf
∘ einer Verfolgung der ersten Referenzstelle, solange diese innerhalb eines innerhalb des definierten Frequenzbereichs definierten Toleranzbereichs liegt, und
∘ einer fortlaufenden Ableitung der Ablage des Frequenzwerts einer eingestellten Grundmodulationsfrequenz zur ersten Referenzstelle,
wobei die fortlaufende Ableitung der Ablage auf einem mit einem Wobbelgenerator bereitgestellten Wobble (13) der Grundmodulationsfrequenz basiert, wobei
• der Wobblegenerator konfiguriert ist zur Bereitstellung des Wobble (13) als ein Wobble mit einem zumindest Abschnittsweise kontinuierlich steigenden oder kontinuierlich fallenden Frequenzverlauf, insbesondere zur Bereitstellung des Wobble (13) als ein Dreiecksignal, ein Sägezahnsignal, oder ein Sinussignal,
• die Recheneinheit konfiguriert ist, um das erfasste Messsignal mittels Fourier Transformation zu transformieren, und
• die Recheneinheit die Bestimmung der Distanz basierend auf dem Fourier transformierten Messsignal (30) durchführt,
wobei die Recheneinheit zur Bestimmung der Distanz für eine eingestellte Grundmodulationsfrequenz die Ablage des Frequenzwerts der Grundmodulationsfrequenz zu einer Referenzstelle, insbesondere einer Minimalstelle, des Signalverlaufs (11) des Messsignals ableitet, nämlich den Frequenzoffset und die Offsetrichtung zur Referenzstelle.

5. Distanzmesser (1) nach Anspruch 4,
**dadurch gekennzeichnet, dass**
der Messvorgang einen Schritt umfasst, so dass im Fall, wenn die erste Referenzstelle den Toleranzbereich verlässt, basierend auf der letzten Ermittlung der Ablage zur ersten Referenzstelle innerhalb des Toleranzbereichs, im Speziellen unter Berücksichtigung einer Abschätzung einer tendenziellen Bewegungsrichtung der ersten Referenzstelle, eine weitere Referenzstelle innerhalb des Toleranzbereichs ausgewählt wird, und das fortlaufende Bestimmen der jeweils aktuellen Distanz zum Ziel fortgesetzt wird, basierend auf
• einer Verfolgung der weiteren Referenzstelle, solange diese innerhalb des Toleranzbereichs liegt und
• einer fortlaufenden Ableitung der Ablage des Frequenzwerts einer eingestellten Grundmodulationsfrequenz zur weiteren Referenzstelle.

6. Distanzmesser (1) nach Anspruch 4 oder 5,
**dadurch gekennzeichnet, dass**
die einstellbare Grundmodulationsfrequenz im Rahmen des Messvorgangs angepasst wird, basierend auf
• einzeln abgeleiteten Ablagen oder einer Serie von abgeleiteten Ablagen von Frequenzwerten von zuvor eingestellten Grundmodulationsfrequenzen zur ersten Referenzstelle und/oder
• einzeln abgeleiteten Ablagen oder einer Serie von abgeleiteten Ablagen von Frequenzwerten von zuvor eingestellten Grundmodulationsfrequenzen zur weiteren Referenzstelle.

## Claims

1. Method for determining a distance to a retroreflective target (8), comprising
• generating a transmission radiation (7),
• modulating (20) the transmission radiation (7), wherein a basic modulation of the transmission radiation with a basic modulation frequency is provided by modulation means (5) in the optical beam path of the transmission radiation (7),
• emitting the modulated transmission radiation to the target (8), and
• detecting a measurement signal on the basis of part of the modulated transmission radiation returning from the target, referred to hereinafter as reception radiation (9), and
wherein detecting the measurement signal is carried out in such a way that information regarding the absolute distance to the target (8) is attached to the measurement signal by means of at least one reference point of a frequency-dependent signal profile (11) of the measurement signal, on the basis of a modulation phase of the reception radiation (9) with respect to a set basic modulation,
**characterized in that**
the distance to the target (8) is determined continuously, on the basis of a measurement process with defined steps corresponding to the temporal order below:
• initially determining an initial distance to the target (8) on the basis of
∘ an identification of a first and a second reference point of the signal profile (11) of the measurement signal, on the basis of a sweep of the basic modulation frequency over a defined frequency range and/or by means of defined adaptation of a sequence of frequency steps of the basic modulation frequency,
∘ a tracking of the first and second reference points, and
∘ deriving (12) the initial distance on the basis of the identified first and second reference points,
• continuously determining a respective current distance to the target on the basis of a setable basic modulation frequency, on the basis of
∘ a tracking of the first reference point as long as the latter lies within a tolerance range defined within the defined frequency range, and
∘ a continuous derivation of the deviation of the frequency value of a set basic modulation frequency with respect to the first reference point,
wherein the continuous derivation of the deviation is based on a wobble (13) of the basic modulation frequency, said wobble being provided by a wobble generator, wherein
• the wobble (13) represents a continuously rising or continuously falling frequency profile at least in sections, in particular wherein the wobble (13) is provided as a triangular signal, a sawtooth signal, or a sinusoidal signal,
• the detected measurement signal is Fourier-transformed (30), and
• the current distance is determined on the basis of the Fourier-transformed measurement signal (30),
wherein for a set basic modulation frequency the deviation of the frequency value of the basic modulation frequency with respect to the first reference point of the signal profile (11) of the measurement signal is derived, namely the frequency offset and the offset direction with respect to the reference point.

2. Method according to Claim 1,
**characterized in that**
in the case where the first reference point leaves the tolerance range, on the basis of the last derivation of the deviation with respect to the first reference point within the tolerance range a further reference point within the tolerance range is selected, and the process of continuously determining the respective current distance to the target is continued, on the basis of
• a tracking of the further reference point as long as the latter lies within the tolerance range and
• a continuous derivation of the deviation of the frequency value of a set basic modulation frequency with respect to the further reference point.

3. Method according to Claim 1 or 2,
**characterized in that**
the setable basic modulation frequency is adapted in the context of the measurement process, on the basis of
• individually derived deviations or a series of derived deviations of frequency values of previously set basic modulation frequencies with respect to the first reference point and/or
• individually derived deviations or a series of derived deviations of frequency values of previously set basic modulation frequencies with respect to the further reference point.

4. Distance measuring device (1) for determining a distance to a retroreflective target (8), comprising
• a radiation source (2) for generating a transmission radiation (7),
• modulation means (5) in the optical beam path of the transmission radiation (7), which are configured for providing a basic modulation of the transmission radiation with a basic modulation frequency,
• a transmission path for emitting part of the modulated transmission radiation to the target (8),
• a reception path comprising a receiver (10) configured for detecting a measurement signal on the basis of part of the modulated transmission radiation returning from the target, referred to hereinafter as reception radiation (9), and
• a computing unit configured for determining the distance as an absolute distance,
wherein the distance measuring device is configured in such a way that emitting the part of the modulated transmission radiation and detecting the measurement signal are carried out in such a way that information regarding the absolute distance to the target (8) is attached to the measurement signal by means of at least one reference point of a frequency-dependent signal profile (11) of the measurement signal, on the basis of a modulation phase of the reception radiation (9) with respect to a set basic modulation,
**characterized in that**
the computing unit is configured for carrying out a fully automated preprogrammed measurement process for continuously detecting the measurement signal and continuously determining the distance to the target (8), wherein the measurement process comprises defined steps corresponding to the temporal order below:
• initially determining an initial distance to the target (8) on the basis of
∘ an identification of a first and a second reference point of the signal profile (11) of the measurement signal, on the basis of a sweep of the basic modulation frequency over a defined frequency range and/or by means of defined adaptation of a sequence of frequency steps of the basic modulation frequency,
∘ a tracking of the first and second reference points, and
∘ deriving (12) the initial distance on the basis of the identified first and second reference points,
• continuously determining a respective current distance to the target on the basis of a setable basic modulation frequency, on the basis of
∘ a tracking of the first reference point as long as the latter lies within a tolerance range defined within the defined frequency range, and
∘ a continuous derivation of the deviation of the frequency value of a set basic modulation frequency with respect to the first reference point,
wherein the continuous derivation of the deviation is based on a wobble (13) of the basic modulation frequency, said wobble being provided by a wobble generator, wherein
• the wobble generator is configured for providing the wobble (13) as a wobble having a continuously rising or continuously falling frequency profile at least in sections, in particular for providing the wobble (13) as a triangular signal, a sawtooth signal, or a sinusoidal signal,
• the computing unit is configured to transform the detected measurement signal by means of Fourier transformation, and
• the computing unit carries out the determination of the distance on the basis of the Fourier-transformed measurement signal (30),
wherein the computing unit, for the purpose of determining the distance for a set basic modulation frequency, derives the deviation of the frequency value of the basic modulation frequency with respect to a reference point, in particular a minimum point, of the signal profile (11) of the measurement signal, namely the frequency offset and the offset direction with respect to the reference point.

5. Distance measuring device (1) according to Claim 4,
**characterized in that**
the measurement process comprises a step such that in the case where the first reference point leaves the tolerance range, on the basis of the last derivation of the deviation with respect to the first reference point within the tolerance range, in particular by taking account of an estimation of a trend in the direction of movement of the first reference point, a further reference point within the tolerance range is selected, and the process of continuously determining the respective current distance to the target is continued, on the basis of
• a tracking of the further reference point as long as the latter lies within the tolerance range and
• a continuous derivation of the deviation of the frequency value of a set basic modulation frequency with respect to the further reference point.

6. Distance measuring device (1) according to Claim 4 or 5,
**characterized in that**
the setable basic modulation frequency is adapted in the context of the measurement process, on the basis of
• individually derived deviations or a series of derived deviations of frequency values of previously set basic modulation frequencies with respect to the first reference point and/or
• individually derived deviations or a series of derived deviations of frequency values of previously set basic modulation frequencies with respect to the further reference point.

## Revendications

1. Procédé de détermination d'une distance jusqu'à une cible rétroréfléchissante (8), avec
• une génération d'un faisceau d'émission (7),
• une modulation (20) du faisceau d'émission (7), dans lequel une forme de modulation fondamentale du faisceau d'émission avec une fréquence de modulation fondamentale est fournie par un moyen de modulation (5) dans le chemin optique du faisceau d'émission (7),
• une émission vers la cible (8) du faisceau d'émission modulé, et
• une détection d'un signal de mesure sur la base d'une partie du faisceau d'émission modulé renvoyé par la cible, nommée ci-après faisceau de réception (9), et
dans lequel la détection du signal de mesure s'effectue de telle sorte qu'une information se rapportant à la distance absolue jusqu'à la cible (8) est attachée au signal de mesure par au moins un point de référence d'une caractéristique (11) du signal de mesure dépendant de la fréquence, sur la base d'une phase de modulation du faisceau de réception (9) par rapport à une forme de modulation fondamentale réglée,
**caractérisé en ce que**
la distance jusqu'à la cible (8) est déterminée en continu, sur la base d'une opération de mesure avec des étapes définies correspondant à l'ordre chronologique ci-après :
• détermination initiale d'une distance initiale jusqu'à la cible (8) sur la base
∘ d'une identification d'un premier et d'un deuxième point de référence d'une caractéristique (11) du signal de mesure, sur la base d'un balayage de la fréquence de modulation fondamentale sur une gamme de fréquences définie et/ou au moyen d'un ajustement défini d'une séquence de pas de fréquence de la fréquence de modulation fondamentale,
∘ d'un suivi du premier et du deuxième point de référence, et
∘ d'une dérivation (12) de la distance initiale sur la base des premier et deuxième points de référence identifiés,
• détermination en continu d'une distance respectivement actuelle jusqu'à la cible sur la base d'une fréquence de modulation fondamentale réglable, sur la base
∘ d'un suivi du premier point de référence, tant que celui-ci se trouve à l'intérieur d'un intervalle de tolérance défini à l'intérieur de la gamme de fréquences définie, et
∘ d'une dérivation en continu du décalage par rapport au premier point de référence de la valeur de fréquence d'une fréquence de modulation fondamentale réglée,
dans lequel la dérivation en continu du décalage se base sur une ondulation (13) de la fréquence de modulation fondamentale fournie par un générateur d'ondulation, dans lequel
• l'ondulation (13) représente au moins par sections une caractéristique de fréquence augmentant de manière continue ou diminuant de manière continue, en particulier dans lequel l'ondulation (13) est fournie comme un signal triangulaire, un signal en dent de scie ou un signal sinusoïdal,
• le signal de mesure détecté est transformé de Fourier (30), et
• la détermination de la distance actuelle s'effectue sur la base du signal de mesure transformé de Fourier (30),
**en ce que** le décalage de la valeur de la fréquence de modulation fondamentale par rapport au premier point de référence de la caractéristique (11) du signal de mesure est dérivé pour une fréquence de modulation fondamentale réglée, à savoir le déport de fréquence et la direction du déport par rapport au point de référence.

2. Procédé selon la revendication 1,
**caractérisé en ce que**
dans le cas où le premier point de référence sort de l'intervalle de tolérance, sur la base de la dernière détermination du décalage par rapport au premier point de référence à l'intérieur de l'intervalle de tolérance, un point de référence ultérieur est choisi à l'intérieur de l'intervalle de tolérance, et la détermination en continu de la distance respective jusqu'à la cible est reprise, sur la base
• d'un suivi du point de référence ultérieur, tant que celui-ci se trouve à l'intérieur de l'intervalle de tolérance et
• d'une dérivation en continu du décalage par rapport au point de référence ultérieur de la valeur de fréquence d'une fréquence de modulation fondamentale réglée.

3. Procédé selon la revendication 1 ou 2,
**caractérisé en ce que**
la fréquence de modulation fondamentale réglable est ajustée dans le cadre de l'opération de mesure, sur la base
• de décalages dérivés individuellement ou d'une série de décalages dérivés de valeurs de fréquences de modulation fondamentale réglées précédemment par rapport au premier point de référence et/ou
• de décalages dérivés individuellement ou d'une série de décalages dérivés de valeurs de fréquences de modulation fondamentale réglées précédemment par rapport au point de référence ultérieur.

4. Télémètre (1) de détermination d'une distance jusqu'à une cible rétroréfléchissante (8), doté
• d'une source de rayonnement (2) destinée à générer un faisceau d'émission (7),
• de moyens de modulation (5) dans le chemin optique du faisceau d'émission (7), lesquels sont configurés pour fournir une modulation fondamentale du faisceau d'émission avec une fréquence de modulation fondamentale,
• d'une voie d'émission destinée à envoyer une partie du faisceau d'émission modulée vers la cible (8),
• d'une voie de réception dotée d'un récepteur (10), lequel est configuré pour la détection d'un signal de mesure sur la base d'une partie du faisceau d'émission modulé renvoyé par la cible, nommée ci-après faisceau de réception (9), et
• d'une unité de calcul, laquelle est configurée pour déterminer la distance en tant que distance absolue, dans lequel le télémètre est configuré de telle sorte que l'envoi de la partie du faisceau d'émission modulée et la détection du signal de mesure s'effectue de telle sorte qu'une information se rapportant à la distance absolue jusqu'à la cible (8) est attachée au signal de mesure par au moins un point de référence d'une caractéristique (11) du signal de mesure dépendant de la fréquence, sur la base d'une phase de modulation du faisceau de réception (9) par rapport à une forme de modulation fondamentale réglée,
**caractérisé en ce que**
l'unité de calcul est configurée pour mettre en œuvre une opération de mesure préprogrammée entièrement automatique pour une détection en continu du signal de mesure et une détermination en continu de la distance jusqu'à la cible (8), dans lequel l'opération de mesure comprend des étapes définies correspondant à l'ordre chronologique ci-après :
• détermination initiale d'une distance initiale jusqu'à la cible (8) sur la base
∘ d'une identification d'un premier et d'un deuxième point de référence d'une caractéristique (11) du signal de mesure, sur la base d'un balayage de la fréquence de modulation fondamentale sur une gamme de fréquences définie et/ou au moyen d'un ajustement défini d'une séquence de pas de fréquence de la fréquence de modulation fondamentale,
∘ d'un suivi du premier et du deuxième point de référence, et
∘ d'une dérivation (12) de la distance initiale sur la base des premier et deuxième points de référence identifiés,
• détermination en continu d'une distance respectivement actuelle jusqu'à la cible sur la base d'une fréquence de modulation fondamentale réglable, sur la base
∘ d'un suivi du premier point de référence, tant que celui-ci se trouve à l'intérieur d'un intervalle de tolérance défini à l'intérieur de la gamme de fréquences définie, et
∘ d'une dérivation en continu du décalage par rapport au premier point de référence de la valeur de fréquence d'une fréquence de modulation fondamentale réglée,
dans lequel la dérivation en continu du décalage se base sur une ondulation (13) de la fréquence de modulation fondamentale fournie par un générateur d'ondulation, dans lequel
• le générateur d'ondulation est configuré pour fournir l'ondulation (13) comme une ondulation dotée au moins par sections d'une caractéristique de fréquence augmentant de manière continue ou diminuant de manière continue, en particulier pour fournir l'ondulation (13) comme un signal triangulaire, un signal en dent de scie ou un signal sinusoïdal,
• l'unité de calcul est configurée pour transformer le signal de mesure détecté au moyen d'une transformation de Fourier, et
• l'unité de calcul met en œuvre la détermination de la distance sur la base du signal de mesure transformé de Fourier (30),
dans lequel pour la détermination de la distance l'unité de calcul dérive le décalage de la valeur de la fréquence de modulation fondamentale par rapport à un point de référence, en particulier un point minimum, de la caractéristique (11) du signal de mesure pour une fréquence de modulation fondamentale réglée, à savoir le déport de fréquence et la direction du déport par rapport au point de référence.

5. Télémètre (1) selon la revendication 4,
**caractérisé en ce que**
l'opération de mesure comprend une étape, de sorte que dans le cas où le premier point de référence sort de l'intervalle de tolérance, sur la base de la dernière détermination du décalage par rapport au premier point de référence à l'intérieur de l'intervalle de tolérance, tout spécialement en tenant compte d'une estimation d'une direction tendancielle du mouvement du premier point de référence, un point de référence ultérieur est choisi à l'intérieur de l'intervalle de tolérance, et la détermination en continu de la distance respective jusqu'à la cible est reprise, sur la base
• d'un suivi du point de référence ultérieur, tant que celui-ci se trouve à l'intérieur de l'intervalle de tolérance et
• d'une dérivation en continu du décalage par rapport au point de référence ultérieur de la valeur de fréquence d'une fréquence de modulation fondamentale réglée.

6. Télémètre (1) selon la revendication 4 ou 5, **caractérisé en ce que**
la fréquence de modulation de base réglée dans le cadre de l'opération de mesure est ajustée, sur la base
• de décalages dérivés individuellement ou d'une série de décalages dérivés de valeurs de fréquences de modulation fondamentale réglées précédemment par rapport au premier point de référence et/ou
• de décalages dérivés individuellement ou d'une série de décalages dérivés de valeurs de fréquences de modulation de base réglées précédemment par rapport au point de référence ultérieur.
